# EUROPEAN PATENT APPLICATION

(11) **EP 4 503 504 A1**
(43) Date of publication of application: **05.02.2025**
(21) Application number: 23774401.6
(22) Date of filing: 28.02.2023
(51) Int. Cl.: H04L 9/08, H04L 9/14, H04L 9/32, G06F 21/32, G06F 21/64

(54) **INFORMATION TRANSMISSION/RECEPTION SYSTEM**

(30) Priority: 24.03.2022 JP 2022048193
(71) Applicant: KABUSHIKI KAISHA TOSHIBA, Minato-ku Tokyo 105-0023 (JP); TOSHIBA INFRASTRUCTURE SYSTEMS & SOLUTIONS CORPORATION, Saiwai-ku Kawasaki-shi Kanagawa 212-0013 (JP)
(72) Inventor: WATANABE, Makoto, Kawasaki-shi, Kanagawa 212-0001 (JP)
(74) Representative: Horn Kleimann Waitzhofer Schmid-Dreyer Patent- und Rechtsanwälte PartG mbB
(86) International application number: PCT/JP2023/007298
(87) International publication number: WO 2023/181802

(57) **Abstract**

An information transmitter/receiver system capable of securely transmitting and receiving electronic data and reliably acquiring the electronic data by a recipient. According to an embodiment, the information transmitter/receiver system includes a transmitter and a receiver. The receiver includes a first communication unit, an interface, a storage unit and a first processor. The transmitter includes a second communication unit and a second processor. The interface is connected to a biometric authentication device which performs biometric authentication for a recipient. The storage unit which stores a first key of a recipient who has succeeded in the biometric authentication performed by the biometric authentication device and a second key of the recipient corresponding to the first key. The first processor causes the transmitter to store electronic data locked with the second key of the recipient and unlocks the electronic data locked with the second key of the recipient using the first key of the recipient who has succeeded in the biometric authentication performed by the biometric authentication device. The second processor transmits to the receiver the electronic data locked with the second key of the recipient.

## Description

### FIELD

An embodiment described herein relates generally to an information transmitter/receiver system.

### BACKGROUND

In order to send, for example, confidential information by email, conventionally, a file as electronic data containing the confidential information with a password set is often attached to the email. In such a case, the sender notifies the destination (recipient) of the password set in the file attached to the email by a transmission method other than the email.

Since, however, the recipient is notified of the password set in the file attached to the email by a transmission method other than the email, the password may be lost. If the password is lost, the file with the password set cannot be opened. Therefore, there is a need for a system capable of securely transmitting and receiving electronic data such as a file attached to an email and reliably opening the data by a recipient.

### CITATION LIST

### PATENT LITERATURE

Patent literature 1: Jpn. Pat. Appln. KOKAI Publication No. 2013-152511

### SUMMARY

### TECHNICAL PROBLEM

In order to solve the foregoing problem, an information transmitter/receiver system capable of securely transmitting and receiving electronic data and reliably acquiring the electronic data by a recipient.

### SOLUTION TO PROBLEM

According to an embodiment, an information transmitter/receiver system comprises a transmitter and a receiver. The receiver includes a first communication unit, an interface, a storage unit and a first processor. The transmitter includes a second communication unit and a second processor. The first communication unit communicates with the transmitter. The interface is connected to a biometric authentication device which performs biometric authentication for a recipient. The storage unit which stores a first key of a recipient who has succeeded in the biometric authentication performed by the biometric authentication device and a second key of the recipient corresponding to the first key. The first processor causes the transmitter to store electronic data locked with the second key of the recipient and unlocks the electronic data locked with the second key of the recipient using the first key of the recipient who has succeeded in the biometric authentication performed by the biometric authentication device. The second communication unit communicates with the receiver. The second processor transmits to the receiver the electronic data locked with the second key of the recipient.

### BRIEF DESCRIPTION OF THE DRAWINGS

FIG. 1 is a schematic diagram showing a configuration example of an information transmitter/receiver system according to an embodiment.
FIG. 2 is a block diagram showing a configuration example of a transmitter in the information transmitter/receiver system according to the embodiment.
FIG. 3 is a block diagram showing a configuration example of a receiver in the information transmitter/receiver system according to the embodiment.
FIG. 4 is a schematic diagram illustrating a first operation example of the information transmitter/receiver system according to the embodiment.
FIG. 5 is a sequence illustrating the first operation example in the information transmitter/receiver system according to the embodiment.
FIG. 6 is a diagram for schematically explaining a second operation example of the information transmitter/receiver system according to the embodiment.
FIG. 7 is a sequence illustrating the second operation example in the information transmitter/receiver system according to the embodiment.
FIG. 8 is a schematic diagram illustrating a third operation example of the information transmitter/receiver system according to the embodiment.
FIG. 9 is a sequence illustrating the third operation example in the information transmitter/receiver system according to the embodiment.
FIG. 10 is a schematic diagram illustrating a fourth operation example in the information transmitter/receiver system according to the embodiment.
FIG. 11 is a sequence illustrating the fourth operation example in the information transmitter/receiver system according to the embodiment.
FIG. 12 is a schematic diagram illustrating a fifth operation example in the information transmitter/receiver system according to the embodiment.
FIG. 13 is a sequence illustrating the fifth operation example in the information transmitter/receiver system according to the embodiment.
FIG. 14 is a sequence illustrating the fifth operation example in the information transmitter/receiver system according to the embodiment.

### DETAILED DESCRIPTION

An embodiment will be described below with reference to the drawings.

First, an issuance (registration) procedure of an authentication device for use in an information transmitter/receiver system according to the embodiment will be described.

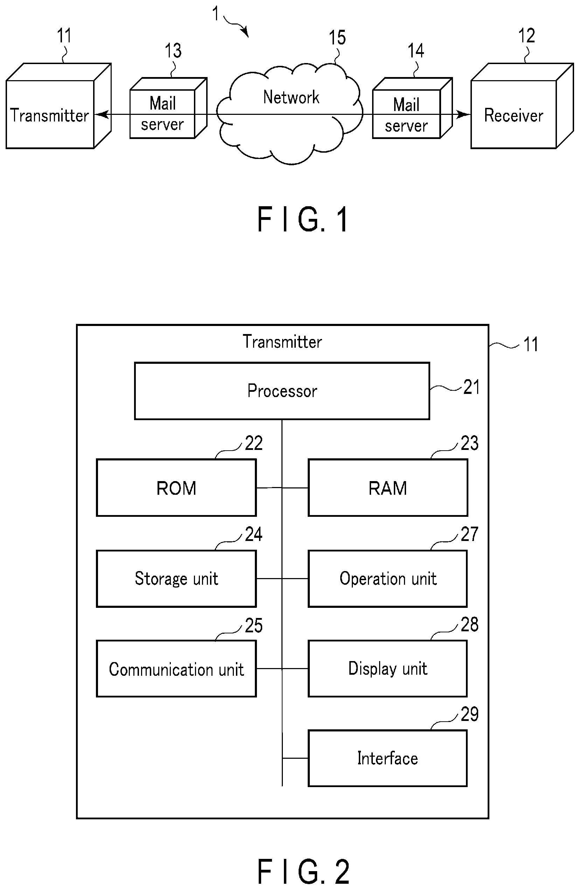

FIG. 1 is a schematic diagram showing a configuration example of the information transmitter/receiver system according to the embodiment.

In the configuration example shown in FIG. 1, the information transmitter/receiver system 1 includes a transmitter 11 and a receiver 12. The transmitter 11 and the receiver 12 transmit and receive email with a file attached as electronic data to be protected via mail servers 13 and 14 and a network 15. In the information transmitter/receiver system 1, the transmitter 11 and the receiver 12 may transmit and receive electronic data to be protected without using the mail server 13 or 14.

The transmitter 11 is a terminal device that is used by a sender who sends email. The receiver 12 is a terminal device that is used by a recipient who receives email. The transmitter 11 and receiver 12 are electronic devices having a function of transmitting and receiving electronic data. For example, the transmitter 11 and receiver 12 are, for example, personal computers (PC), smartphones and communication devices on which application programs for transmitting and receiving email are installed.

The transmitter 11 and receiver 12 include an interface connected to a biometric authentication device that performs biometric authentication to authenticate a user by biometric information. The transmitter 11 and receiver 12 may also be configured to include a biometric authentication unit that performing biometric authentication to authenticate a user by biometric information. Note that if the information transmitter/receiver system 1 is operated without requiring biometric authentication of a sender, a biometric authentication device need not be connected to the transmitter 11 need not be connected.

Next is a description of a configuration of the transmitter 11 in the information transmitter/receiver system 1 according to the embodiment.

FIG. 2 is a block diagram showing an example of the configuration of the transmitter 11 in the information transmitter/receiver system 1 according to the embodiment.

As shown in FIG. 2, the transmitter 11 includes a processor 21, a ROM 22, a RAM 23, a storage unit 24, a communication unit 25, an operation unit 27, a display unit 28 and an interface 29.

The processor 21 executes programs to perform a variety of processes. The processor 21 is a central processing unit (CPU), for example. The processor 21 is connected to each of the units in the transmitter 11 via a system bus to transmit and receive data to and from the units. The processor 21 cooperates with the ROM 22 and RAM 23 to perform operations such as control and data processing in the transmitter 11.

The read only memory (ROM) 22 is a nonvolatile memory that stores programs, control data and the like for performing basic operations of the transmitter 11.

The random access memory (RAM) 23 is a volatile memory that stores data temporarily. The RAM 23 functions as working memory when the processor 21 executes a program.

The storage unit 24 is a memory that stores a variety of items of data. The storage unit 24 is configured by a nonvolatile memory capable of rewriting data. The storage unit 24 stores, for example, an OS program, an application program and operation setting information. It is assumed in the present embodiment that the storage unit 24 stores a program for transmitting and receiving email, a program for processing data using key information, and a program for performing a variety of processes to be described later.

It is also assumed that the storage unit 24 has a secure storage area to securely store information such as key information to be held by a sender (e.g., sender's public and private keys). In addition, the storage unit 34 may store biometric information (biometric information for use in biometric authentication) of a registrant (sender) that is a user who uses the transmitter 11 or may hold key information to be held by a sender (e.g., sender's first and second keys) in a secure storage area.

The communication unit 25 is a communication interface that communicates with an external device. The communication unit 25 may perform communications wirelessly or by wire. In the present embodiment, the communication unit 25 transmits email to the receiver 12 via the mail server 13 and the network 15.

The operation unit 27 is an input device for inputting user's (sender's) operating instructions. The operation unit 27 includes, for example, a keyboard, a touch panel and a mouse. The display unit 28 is a display that displays information. For example, when an email with a file attached is transmitted, the display unit 28 displays a setting screen or the like to instruct the user on a destination, a file to be attached, condition information added to the file, and the like. In addition, the operation unit 27 and the display unit 28 may be configured by a display device with a touch panel.

The interface 29 is connected to an external device. The interface 29 has a configuration similar to that of a biometric authentication device 40 (described later) connected to the receiver 12 to perform biometric authentication for a sender as a user who operates the transmitter 11. The transmitter 11 may also be configured to include a biometric authentication unit that performs biometric authentication for the sender.

Next is a description of a configuration of the receiver 12 in the information transmitter/receiver system 1 according to the embodiment.

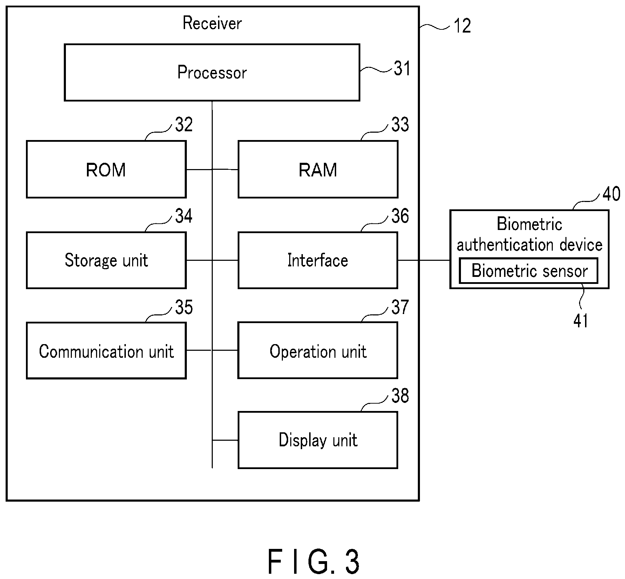

FIG. 3 is a block diagram showing an example of the configuration of the receiver 12 in the information transmitter/receiver system 1 according to the embodiment.

As shown in FIG. 3, the receiver 12 includes a processor 31, a ROM 32, a RAM 33, a storage unit 34, a communication unit 35, an interface 36, an operation unit 37 and a display unit 38.

The processor 31 executes programs to perform a variety of processes. The processor 31 is a central processing unit (CPU), for example. The processor 31 is connected to each of the units in the receiver 12 via a system bus to transmit and receive data to and from the units. The processor 31 cooperates with the ROM 32 and RAM 33 to perform operations such as control and data processing in the receiver 12.

The read only memory (ROM) 32 is a nonvolatile memory that stores programs, control data and the like for performing basic operations of the receiver 12.

The random access memory (RAM) 33 is a volatile memory that stores data temporarily. The RAM 33 functions as working memory when the processor 31 executes a program.

The storage unit 34 is a memory that stores a variety of items of data. The storage unit 34 is configured by a nonvolatile memory capable of rewriting data. The storage unit 34 stores, for example, an OS program, an application program and operation setting information. It is assumed in the present embodiment that the storage unit 24 stores a program for transmitting and receiving email, a program for processing data using key information, and a program for performing a variety of processes to be described later. It is also assumed that the storage unit 24 has a secure storage area to store key information to be held by a recipient (e.g., recipient's first and second keys). In addition, the storage unit 34 may store biometric information of a registrant (recipient) that is a user who uses the receiver.

The communication unit 35 is a communication interface that communicates with an external device. The communication unit 35 may perform communications wirelessly or by wire. In the present embodiment, the communication unit 35 communicates with the transmitter 11 via a wide area network 15 such as the Internet.

The interface 36 is connected to an external device. In the example shown in FIG. 3, the interface 36 is connected to the biometric authentication device 40. The biometric authentication device 40 includes a biometric sensor 41. The biometric authentication device 40 performs person authentication (biometric authentication) based on biometric information acquired by the biometric sensor 41. The biometric sensor 41 is a sensor that acquires biometric information of a person as authentication information for use in authentication processing. The biometric authentication device 40 compares the biometric information read by the biometric sensor 41 with that of a user (recipient) registered in advance to authenticate the person whose biometric information is read by the biometric sensor 41 as the user (recipient) registered in advance.

The biometric sensor 41 is, for example, a fingerprint sensor that reads user's fingerprint information (fingerprint image). The biometric sensor 41 is not limited to the fingerprint sensor but may be a sensor that acquires biometric information (e.g., a face image, a palm print, a vein and an iris) other than a fingerprint. The biometric authentication device 40 has a function of performing biometric authentication corresponding to the biometric information acquired by the biometric sensor 41 (e.g., an IC chip that performs fingerprint matching, face matching, palm print matching, vein matching, iris matching, etc.).

Note that the biometric authentication device 40 supplies biometric information acquired by the biometric sensor 41 to the processor 31, and the processor 31 may perform biometric authentication based on the biometric information acquired by the biometric sensor 41.

In addition, the receiver 12 may be configured to include a biometric authentication unit that performs biometric authentication equivalent to that of the biometric authentication device 40. The receiver 12 may also register the biometric information of the user (recipient) who is a registrant for use in biometric authentication in the storage unit 34 or may register it in a memory provided in the biometric authentication device 40.

The operation unit 37 is an input device for inputting user's operating instructions. The operation unit 37 is, for example, a keyboard, a touch panel and a mouse. The display unit 38 is a display that displays information. For example, the display unit 38 displays data in a locked file if the locked file is unlocked with key data. In addition, the operation unit 37 and the display unit 38 may be configured by a display device with a touch panel.

Note that the information transmitter/receiver system 1 may be configured to store email received by the receiver 12 or a file attached to the email in an external device such as a file server. In this case, the receiver 12 may include an interface to gain access to a file server as an external device for storing the received email or the file attached to the email.

Next is a description of a file (electronic data) transmission/reception process to be performed by the information transmitter/receiver system 1 according to the present embodiment.

First is a description of a first operation example of the file transmission/reception process to be performed by the information transmitter/receiver system 1 according to the present embodiment.

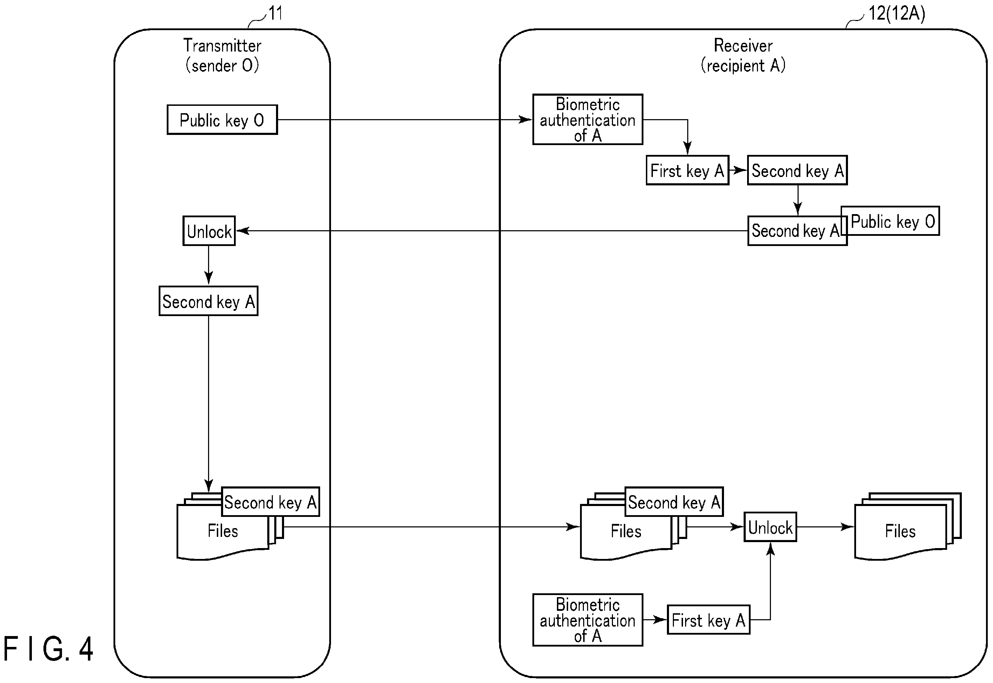

FIG. 4 is a schematic diagram illustrating the first operation example of the file transmission/reception process to be performed by the information transmitter/receiver system 1 according to the present embodiment.

The first operation example will be described on the assumption that a sender O transmits a file to one recipient A as shown in FIG. 4. Assume that the transmitter 11 holds a public key (public key O) and a private key (private key O) of the sender O. Also, assume that the receiver 12 (12A) is configured to register biometric information of the recipient A to perform biometric authentication for the recipient A.

First, the transmitter 11 supplies the public key O of the sender O to the receiver 12A of the recipient A before transmitting the file. Upon acquiring the public key O of the sender O, the receiver 12A performs biometric authentication to authenticate the recipient A. If the biometric authentication is successful (if the recipient A is authenticated), the receiver 12A generates a first key A of the recipient A and a second key A related to the first key A. If the receiver 12A generates the first key and the second key A, it transmits data, which is obtained by encrypting the second key A with the public key O, to the transmitter 11.

When the transmitter 11 acquires from the receiver 12A the data obtained by encrypting the second key A with the public key O, it decrypts (unlocks) the encrypted second key A using a private key corresponding to the public key O to acquire the second key A. When the transmitter acquires the second key, it locks (encrypts) the file to be transmitted to the recipient A with the second key A. The transmitter 11 transmits the file locked with the second key A to the receiver 12A of the recipient A.

The receiver 12A stores the file locked with the second key A received from the sender O. To view the file locked with the second key A (the file received from the transmitter 11), the recipient A performs biometric authentication using the receiver 12A. The receiver 12A acquires biometric information of the recipient A in response to an operation of the recipient A to perform biometric authentication. If the recipient A is authenticated by the biometric authentication, the receiver 12A acquires the first key A of the recipient A and unlocks the file locked with the second key A using the first key A of the recipient A. Thus, the receiver 12A can view the file locked with the second key A received from the sender O.

Next is a description of the operations of the transmitter 11 and the receiver 12 (12A) in the first operation example of the file transmission/reception process to be performed by the information transmitter/receiver system 1 according to the embodiment.

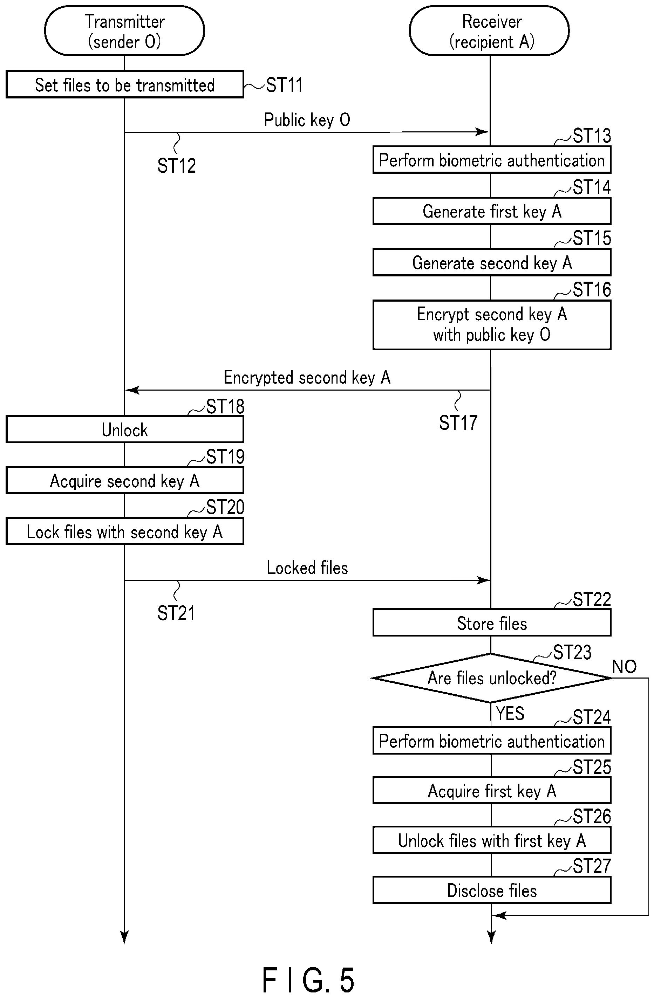

FIG. 5 is a sequence illustrating an operation example of each of the transmitter 11 and receiver 12A in the first operation example of the file transmission/reception process to be performed by the information transmitter/receiver system 1 according to the embodiment.

For example, the sender O instructs the operation unit 27 of the transmitter 11 to transmit a file (electronic data to be protected) in which security settings are applied to the recipient A. The processor 21 of the transmitter 11 sets a transmission destination (recipient) and a file to be transmitted in response to an operating instruction from the sender O (ST11).

If the recipient A is set as a transmission destination, the processor 21 of the transmitter 11 causes the communication unit 25 to transmit (disclose) the public key O of the sender O to the recipient A and request a second key to be generated by the receiver 12A of the recipient A in connection with the biometric authentication (ST12). For example, the processor 21 may transmit a request for the second key A including the public key O to the recipient A via email. The second key A is key data corresponding to the first key A to be generated when the biometric authentication of the recipient A is successful, and is generated from the first key A by a predetermined algorithm, for example.

The receiver 12A of the recipient A receives a second key request and a public key O, which are transmitted to the recipient A, from the sender O by the communication unit 35. When the processor 31 of the receiver 12A receives the second key request from the sender O, the biometric authentication device 40 connected to the interface 36 performs biometric authentication of the recipient A (ST13). When the biometric authentication for the recipient A is successful, the processor 31 generates a first key A of the recipient A (ST13). When the processor 31 generates the first key A, it generates a second key A that is paired with the first key A (ST14). That is, the processor 31 generates the first key A and the second key A as a pair of keys for the recipient A in accordance with the success of the biometric authentication for the recipient A. For example, the processor 31 stores the first key A and the second key A in the storage unit 34 such that they can be read when the biometric authentication for the recipient A is successful.

The first key A is generated by a specific algorithm from, for example, biometric information of the recipient A. The first key A may also be reproduced from the biometric information of the recipient A using a predetermined algorithm. In this case, even if the first key A is lost due to a malfunction in the receiver or the like, it can be acquired from the biometric information of the recipient A. In addition, the second key A is generated from the first key A by a specific algorithm. For example, the second key A may be reproduced from the first key A using a predetermined algorithm. In this case, even if the second key A is lost due to a malfunction in the receiver or the like, it can be acquired from the first key A.

The first key A is concealed so that only the recipient A can gain access to it and is stored so that the recipient A can gain access thereto when the biometric authentication of the recipient A is successful. For example, the first key A (or the first key A and the second key A) is not limited to one stored in the storage unit 34 of the receiver 12A, but may be securely stored in a memory in the biometric authentication device 40 or in an external storage device.

When the processor 31 of the receiver 12A generates the second key A, it encrypts (locks) the generated second key A with the public key O (ST16). If the processor 31 encrypts the second key A with the public key O, it transmits data of the second key A encrypted with the public key O to the transmitter 11 of the sender O by the communication unit 35 (ST17).

The transmitter 11 of the sender O receives the data of the second key A encrypted with the public key O by the receiver 12A of the recipient A by the communication unit 25. When the processor 21 of the transmitter 11 receives the second key A encrypted with the public key O, it decrypts (unlocks) the data of the second key A, which is encrypted (locked) with the public key O, by the private key O corresponding to the public key O (ST18). The processor 21 acquires the second key A as data that is decrypted (unlocked) by the private key O (ST19).

When the processor 21 of the transmitter 11 acquires the second key A, it encrypts (locks) a file to be transmitted to the recipient A with the acquired second key A (ST20). When the processor 21 encrypts (locks) the file with the second key A, it creates an email to which the file locked with the second key A is attached. The processor 21 may cause the sender O to create the body of email addressed to the recipient A.

In addition, the processor 21 may add unlocking conditions (conditions to be viewed) to the file locked with the second key A attached to the email. For example, the processor 21 sets an unlocking conditions specified by the sender O using the operation unit 27 to the file locked with the second key A. The unlocking conditions may be a deadline enabling unlocking (viewing) of the file locked with the second key A or a device enabling unlocking. In the former case, the processor 21 may, for example, set an optional deadline designated by the sender O using the operation unit 27 as an unlock deadline (unlocking conditions). In the latter case, for example, the processor 21 may set the receiver 12, which is the transmission (generation) source of the second key A encrypted with the public key O, as an unlockable device.

When the processor 21 of the transmitter 11 creates an email to the recipient A to which the file locked with the second key A is attached, it transmits to the mail server 13 the created email, which is to be addressed to the recipient A, through the communication unit 25 (ST21). The mail server 13 transmits the email, which is to be addressed to the recipient A, to the mail server 14 via the network 15. The mail server 14 transmits the email, which is to be addressed to the recipient A, to the receiver 12 of the recipient A.

The receiver 12A receives the email, which is to be addressed to the recipient A to which the file locked with the second key A is attached, through the communication unit 35. The processor 31 of the receiver 12A causes the storage unit 34 to store the file attached to the received email and locked with the second key A (ST22). The processor 31 may cause the storage unit to store the email to which the file locked with the second key A is attached or may cause the storage unit to store the file locked with the second key A. The processor 31 may also cause an external device such as a file server to store the file locked with the second key A.

The processor 31 of the receiver 12A receives an unlock request for the file locked with the stored second key A which is stored by the recipient A who operates the operation unit 37. If the unlocking conditions is set for the file locked with the second key A, the processor 31 may determine whether to accept the unlock of the file according to whether the received unlock request satisfies the unlocking conditions.

When the processor 31 of the receiver 12A unlocks a file in response to the unlock request (YES in ST23), it causes the biometric authentication device 40 connected to the interface 36 to perform biometric authentication for the recipient A (ST24). If the biometric authentication for the recipient A is successful, the processor 31 acquires the first key A of the recipient A whose biometric authentication is successful (ST25). It is assumed here that the first key A, which is paired with the second key A generated in response to the successful biometric authentication of the recipient A performed when the public key O is received, is stored in the secure storage area of the storage unit 34.

When the processor 21 of the receiver 12A acquires the first key A, it unlocks the file locked with the second key A using the acquired first key A (ST26). If the processor 31 unlocks the file using the first key A, it opens the unlocked file so that it can be viewed (ST27). For example, the processor 31 discloses the contents of the file to the recipient A by displaying data of the file unlocked with the first key A on the display unit 38.

According to the first operation example described above, the information transmitter/receiver system according to the embodiment can receive a file locked with a key that can be obtained by biometric authentication of a recipient from a sender and store the file protected by the key. The recipient A can acquire the protected file at any time with the key that can be obtained by the biometric authentication. As a result, according to the information transmitter/receiver system according to the embodiment, an authorized person (a person who can succeed in biometric authentication) can view a file with reliability at any time without making it impossible to view the file due to the loss of a password or the like.

As described with respect to the first operation example, the information transmitter/receiver system according to the embodiment makes it possible to add an unlocking conditions such as an unlocking (viewing) deadline to a file to be protected by a key. If a sender specifies the viewing deadline, for example, as one year, an unlocking condition of one-year viewing period can be added to a file to be protected by a key. According to the information transmitter/receiver system according to the embodiment, therefore, viewing limitations can be placed on even an authorized recipient (a person who can succeed in biometric authentication) depending upon the unlocking conditions.

Next is a description of a second operation example of the file transmission/reception process to be performed by the information transmitter/receiver system 1 according to the present embodiment.

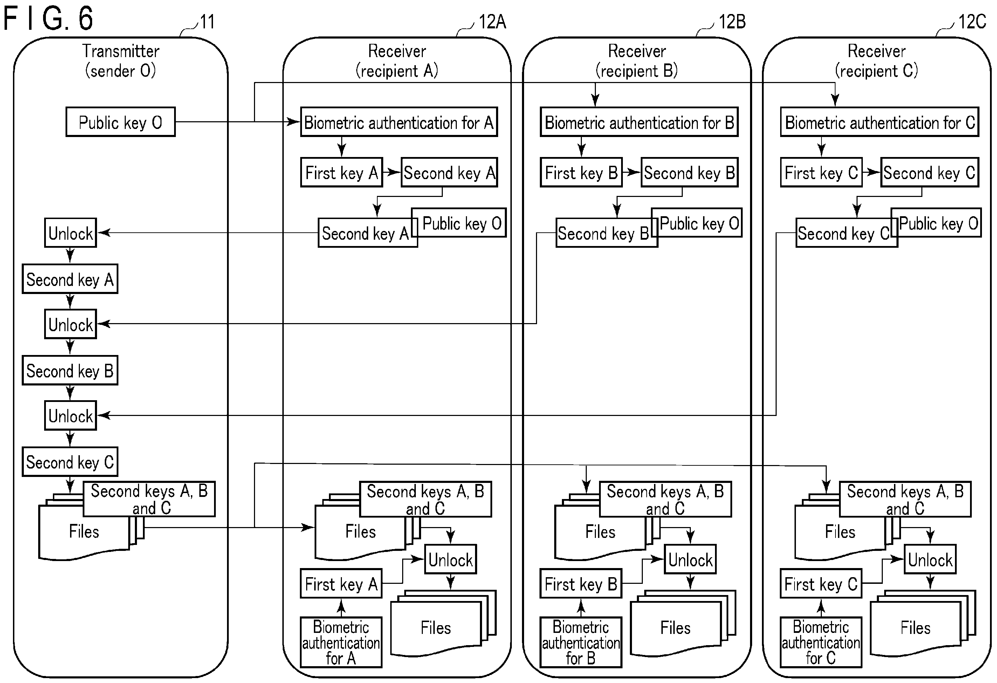

FIG. 6 is a schematic diagram illustrating the second operation example of the file transmission/reception process to be performed by the information transmitter/receiver system 1 according to the embodiment.

As shown in FIG. 6, the second operation example will be described on the assumption that the sender O transmits files to a plurality of recipients A, B and C. That is, it is assumed that the information transmitter/receiver system 1 according to the second operation example includes a transmitter 11 and a plurality of receivers 12 (12A, 12B, 12C). It is also assumed that the transmitter 11 holds a private key and a public key (public key O) of the sender O. In addition, it is assumed that the receiver 12 (12A) of the recipient A, the receiver 12 (12B) of the recipient B and the receiver 12 (12C) of the recipient C register their respective items of biometric information of the recipients A, B and C to allow biometric authentication to be performed for the recipients A, B and C.

First, the transmitter 11 supplies the public key O of the sender O to the receiver 12 of each of the recipients A, B and C before transmitting the files.

Upon receiving the public key O of the sender O, the receivers 12 of the recipients A, B and C perform biometric authentication to authenticate the recipients A, B and C. The receiver 12 that has succeeded in the biometric identification for the recipient A generates a first key A of the recipient A and a second key A paired with the first key A. The receiver 12 that has succeeded in the biometric identification for the recipient B generates a first key B of the recipient B and a second key B paired with the first key B. The receiver 12 that has succeeded in the biometric identification for the recipient C generates a first key C of the recipient C and a second key C paired with the first key C. The receivers 12A, 12B and 12C of the recipients A, B and C transmit to the transmitter 11 data obtained by encrypting the generated second keys A, B and C with the public key O.

The transmitter 11 acquires the second keys A, B and C, which are encrypted with the public key O, from the receivers 12A, 12B and 12C and decrypts (unlocks) the second keys A, B and C encrypted using a private key O corresponding to the public key O, thus acquiring the second keys A, B and C. When the transmitter 11 acquires the second keys A, B and C of all the recipients A, B and C, it locks (encrypts) the files to be transmitted to the recipients A, B and C with the second keys A, B and C. It is assumed here that the files locked (encrypted) by the transmitter 11 with the second keys A, B and C can be unlocked with the first key A, B or C corresponding to the second keys A, B and C. The transmitter 11 transmits the files locked with the second keys A, B and C to the receiver 12 of the recipient A.

The receiver 12 of the recipient A stores the files locked with the second keys A, B and C received from the sender O. When the recipient A views the files locked with the second keys A, B and C, the receiver 12 performs biometric authentication. The receiver 12A that has succeeded in the biometric authentication for the recipient A unlocks the files locked with the second keys A, B and C using the first key A of the recipient A. Accordingly, the recipient A can view the files received from the sender O.

Similarly, when the receiver 12B of the recipient B has succeeded in the biometric authentication for the receiver B, it uses the first key B of the recipient B to unlock the files locked with the second keys A, B and C received from the sender O. Accordingly, the recipient B can also view the files received from the sender O. In addition, when the receiver 12C of the recipient C has succeeded in the biometric authentication for the recipient C, it uses the first key C of the recipient C to unlock the files locked with the second keys A, B and C received from the sender O. Accordingly, the recipient C can also view the files received from the sender O.

Next is a description of operations of the transmitter 11 and the receiver 12 (12A, 12B, 12C) in the second operation example of the file transmission/reception process to be performed by the information transmitter/receiver system 1 according to the embodiment.

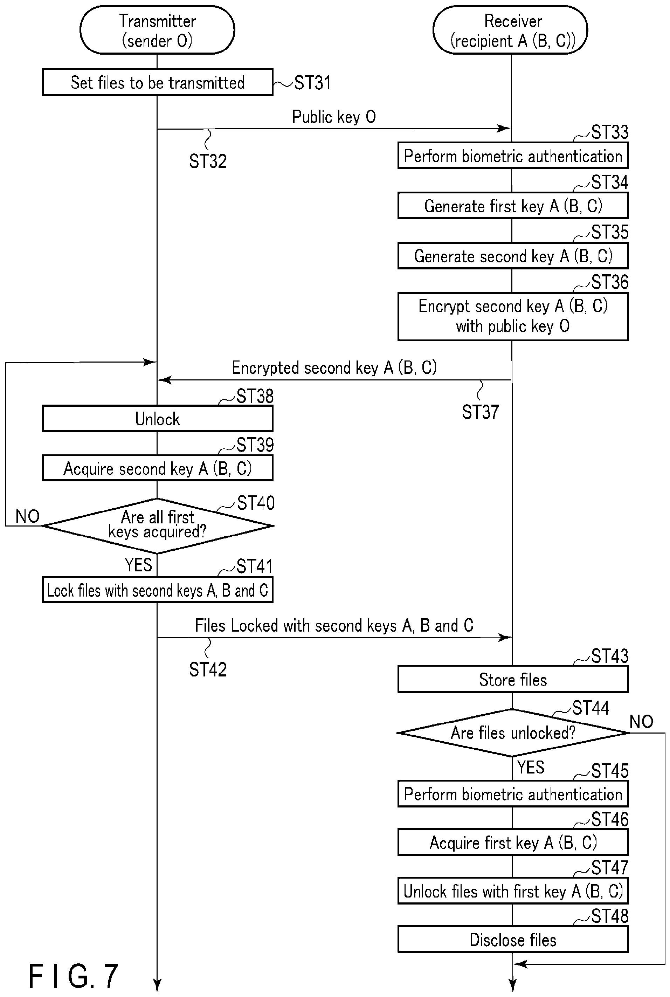

FIG. 7 is a sequence illustrating an operation example of each of the transmitter 11 and receiver 12 (12A, 12B, 12C) in the first operation example of the file transmission/reception process to be performed by the information transmitter/receiver system 1 according to the embodiment.

For example, the sender O instructs the operation unit 27 of the transmitter 11 to transmit files (electronic data to be protected) with security settings to a plurality of transmission destinations (recipients A, B, C). The processor 21 of the transmitter 11 sets the recipients A, B and C, a file to be transmitted to each of the recipients A, B and C, and the like in response to an operation instruction from the sender O (ST31).

When the processor 21 sets the recipients A, B and C as transmission destinations, the communication unit 25 transmits (discloses) the public key O of the sender O to the recipients A, B and C, and requests the receivers 12A, 12B and 12C of the recipients A, B and C to generate the second keys A, B and C in connection with the biometric authentication (ST32). For example, the processor 21 may transmit the request for the second key A and the public key O to the recipient A by email, transmit the request for the second key B and the public key O to the recipient B by email, and transmit the request for the second key C and the public key O to the recipient C by email.

Upon receipt of the request for the second key from the sender O, the processors 31 of the receivers 12A, 12B and 12C of the recipients A, B and C cause the biometric authentication device 40 connected to the interface 36 to perform biometric authentication for the recipients A, B and C, respectively (ST33). When the biometric authentication for the recipient A (B, C) is successful, the processor 31 generates the first key A (B, C) of the recipient A (B, C) who has succeeded in the biometric authentication (ST34). When the processor 31 generates the first key A (B, C), it generates the second key A (B, C) paired with the first key A (B, C) (ST35). The first keys A, B and C and second keys A, B and C generated by their respective receivers 12 A, 12B and 12 C may be the same as those described with respect to the first operation example.

When the processor 31 of the receiver 12A (12B, 12 C) generates the second key A (B, C), it encrypts (locks) the generated second key A (B, C) with the public key O (ST36). When the processor 31 encrypts the second key A (B, C) with the public key O, it causes the communication unit 35 to transmit data of the second key A (B, C) encrypted with the public key O to the transmitter 11 of the sender O (ST37). It is assumed that the second keys A, B and C encrypted with the public key O are transmitted to the transmitter 11 by the receivers 12A, 12B and 12 C, respectively. However, the second keys A, B and C encrypted with the public key O may be transmitted together by any of the receivers 12A, 12B and 12C.

The transmitter 11 of the sender O receives data of the second keys A, B and C encrypted with the public key O from the receivers 12A, 12B and 12C of the recipients A, B and C by the communication unit 35. Each time the processor 21 of the transmitter 11 receives the second key A (B, C) encrypted with the public key O, it decrypts (unlocks) the data of the second key A (B, C) encrypted (locked) with the public key O using a private key corresponding to the public key O (ST38). Thus, the processor 21 acquires the second key A (B, C) as data obtained by decrypting (unlocking) the data from the receiver 12A (12B, 12C) with the private key (ST39).

The processor 21 determines whether the second keys A, B and C are acquired from all the recipients A, B and C, which the file transmission destinations, each time the second keys are acquired from any of the receivers 12A, 12B and 12C of the recipients A, B and C (ST40).

If the processor 21 acquires the second keys A, B and C from all the recipients A, B and C which are file transmission destinations (YES in ST40), it encrypts (locks) files to be transmitted to the recipients A, B and C with all of the acquired second keys A, B and C (ST41). The processor 21 locks (encrypts) the files with the second keys A, B and C so that they can be unlocked with one of the first keys A, B and C.

If the processor 21 encrypts (locks) the files with the second keys A, B and C, it creates an email to which the files locked with the second keys A, B and C are attached. The processor 21 may create the text of email to which a file is attached by the operation of the sender O. The processor 21 may also add unlocking conditions as described in the first operation example to the files locked with the second keys A, B and C attached to the email.

If the processor 21 creates an email to which the files locked with the second keys A, B and C are attached, it transmits the created email to the mail server 13 as email, which is to be addressed to each of the recipients A, B and C, through the communication unit 35 (ST42). The mail server 13 transmits email, which is to be addressed to the recipients A, B and C, to the mail server 14 via the network 15. The mail server 14 transmits email to each of the recipients A, B and C.

The receivers 12A, 12B and 12C receive emails to which the files locked with their respective second keys A, B and C are attached and which are addressed to their respective recipients A, B and C, through the communication unit 25. The processor 31 of the receiver 12A (12B, 12 C) causes the storage unit 34 to store the files attached to the received emails and locked with the second keys A, B and C (ST43). The processor 31 may cause an external device such as a file server to store the files locked with the second keys A, B and C.

For example, the processor 31 of the receiver 12A (12B, 12C) receives an unlocking request for the files stored by the recipient A who operates the operation unit 37 and locked with the second keys A, B and C. If unlocking conditions are set for the files locked with the second keys A, B and C, the processor 31 may determine whether to unlock the files according to whether the unlocking conditions are satisfied upon receipt of the unlocking request.

When the files are unlocked in response to the unlocking request (YES in ST44), the processor 31 of the receiver 12A (12B, 12C) causes the biometric identification device 40 connected to the interface 36 to perform biometric identification for the recipient A (B, C) (ST45). If the biometric authentication for the recipient A (B, C) is successful, the processor 31 acquires the first key A (B, C) of the recipient A (B, C) who has succeed in the biometric authentication (ST46). Assume here that the first key A (B, C) paired with the second key A (B, C) generated in response to the successful biometric authentication for the recipient A (B, C) which is performed upon receipt of the public key O is stored in a secure storage area of the storage unit 34 of the receiver 12A (12B, 12 C). In this case, the processor 31 acquires the first key A (B, C) of the recipient A (B, C) from the storage unit 34.

When the processor 31 of the receiver 12A (12B, 12C) acquires the first key A (B, C), it unlocks the files locked with the second keys A, B and C using the acquired first key A (B, C) (ST47). When the processor 31 of the receiver 12A (12B, 12C) uses the first key A (B, C) to unlock the files, it opens the unlocked files to be brought into a viewable state (ST48). For example, the processor 31 displays data of the files unlocked with the first key A (B, C) on the display unit 38 and thus discloses them to the recipient A.

According to the second operation example described above, even in the case where a sender O transmits files to a plurality of recipients, a transmitter can safely transmit to a plurality of receivers files locked with a plurality of keys acquired by the recipients from their biometric authentication, and each of the receivers can store the files protected with the keys. Each of the recipients can open the protected files at any time using a key that can be acquired by its own biometric authentication. As a result, an authorized person (a person who can succeed in biometric authentication) can view a file with reliability at any time without making it impossible to view the file due to the loss of a password or the like.

Furthermore, in the second operation example, an unlocking condition such as an unlocking (viewing) deadline can be added to a file to be protected by a key. Thus, even in the case where a file is delivered to a plurality of recipients, viewing limitations can be placed on an authorized recipient (a person who can succeed in biometric authentication) depending upon the unlocking conditions.

Next is a description of a third operation example of the file transmission/reception process to be performed by the information transmitter/receiver system 1 according to the present embodiment.

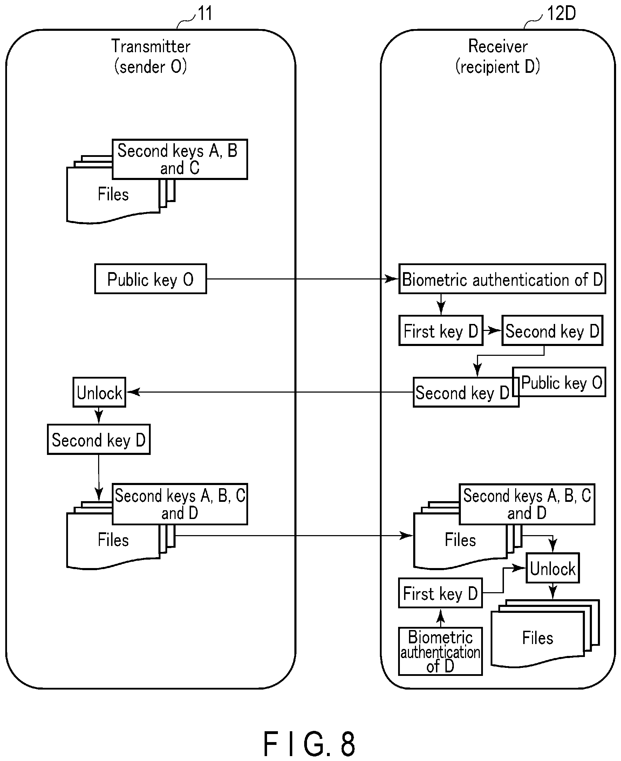

FIG. 8 is a schematic diagram illustrating a third operation example of a file transmission/reception process to be performed by the information transmitter/receiver system 1 according to the embodiment.

The third operation example will be described on the assumption that a sender O transmits files locked with the second keys A, B and C to a plurality of recipients A, B and C in accordance with the second operation example described above and then, as shown in FIG. 8, another recipient D is added to the recipients of the files. Assume here that in addition to the preconditions described in the second operation example, the receiver 12 (12D) of the recipient D registers the biometric information of the recipient D to allow biometric authentication for the recipient D to be performed.

Assume in the third operation example that the transmitter 11 holds the second keys A, B and C of the recipients A, B and C to which the files have been transmitted and the receiver 12A (B, C) holds the files locked with the second keys A, B and C by the transmitter 11 and the second key A (B, C), as shown in FIG. 8. In this state, the process of adding the recipient D as a recipient of the files is performed.

First, the transmitter 11 supplies the public key O of the sender O to the receiver 12D of the recipient D. When the receiver 12D of the recipient D acquires the public key O of the sender O, it performs biometric authentication to authenticate the recipient D. The receiver 12D that has succeeded in the biometric identification for the recipient D generates a first key D of the recipient D and a second key D paired with the first key D. The receiver 12D transmits data, which is obtained by encrypting the generated second key D with the public key O, to the transmitter 11.

The transmitter 11 acquires the second key D encrypted with the public key O from the receiver 12D and decrypts (unlocks) the encrypted second key D using a private key O corresponding to the public key O, thus acquiring the second key D. If the transmitter 11 acquires the second key D of the recipient D is, it locks (encrypts) the files with four second keys A, B, C and D including the newly acquired second key D of the recipient D. Assume here that the files locked (encrypted) by the transmitter 11 with the second keys A, B, C and D can be unlocked with the first key D.

The transmitter 11 transmits the files locked with the second keys A, B, C and D to the receiver 12D of the recipient D. The receiver 12D of the recipient D stores the files locked with the second keys A, B, C and D received from the sender O. The receiver 12D stores the files locked with the second keys A, B, C and D received from the sender O, and then unlocks the files locked with the second keys A, B, C and D using the first key D of the recipient D if the biometric authentication for the recipient D is successful, so that the additional recipient D can also view the files.

The transmitter 11 may also transmit the files locked with the second keys A, B, C and D to the receivers 12A, 12B and 12C of the recipients A, B and C. The receivers 12A, 12B and 12C can store the files locked with the second keys A, B, C and D received from the sender O and unlock the files locked with the second keys A, B, C and D using the first keys A, B and C of the recipients A, B and C when the biometric authentication for the recipients A, B and C is successful.

Next is a description of the operation of each of the transmitter 11 and receiver 12 in the third operation example of the file transmission/reception process to be performed by the information transmitter/receiver system 1 according to the embodiment.

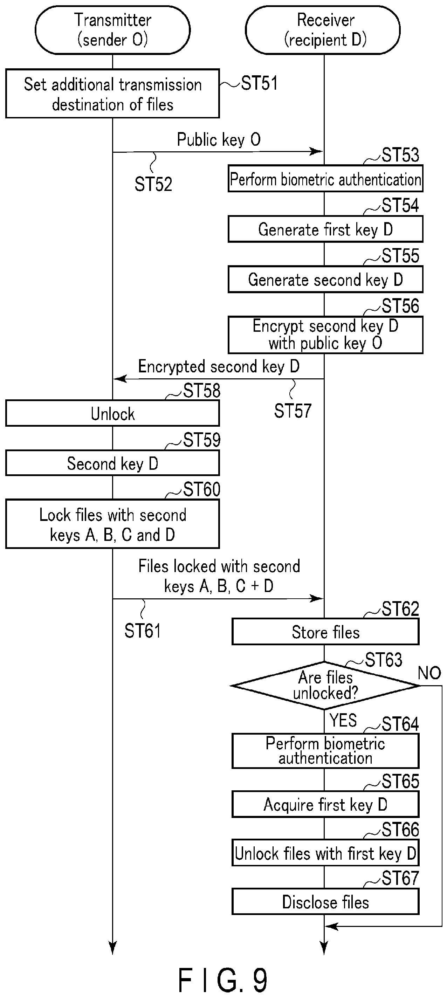

FIG. 9 is a sequence illustrating an operation example of each of the transmitter 11 and receiver 12 (12A, 12B, 12C) in the third operation example of the file transmission/reception process to be performed by the information transmitter/receiver system 1 according to the embodiment.

Assume her that in the process shown in FIG. 9, the receiver 12A (B, C) holds the files locked with the second keys A, B and C received from the transmitter 11, as shown in FIG. 8. Assume that in this state the process shown in FIG. 9 is started.

For example, the sender O instructs the operation unit 27 of the transmitter 11 to add the recipient D to a transmission destination of a file (electronic data to be protected) to which security setting is applied. The processor 21 of the transmitter 11 sets the recipient D as an additional transmission destination (additional recipient) of the file in response to an operation instruction from the sender O (ST51).

If the processor 21 sets the recipient D as an additional transmission destination, it causes the communication unit 25 to transmit (disclose) the public key O of the sender O to the recipient D, and requests the receiver 12D of the recipient D to generate the second key D in connection with the biometric identification (ST52). For example, the processor 21 may transmit the request for the second key D and the public key O to the recipient D by email.

Upon receiving the request for the second key D from the sender O, the processor 31 of the receiver 12D of the recipient D causes the biometric authentication device 40 connected to the interface 36 to perform biometric authentication for the recipient D (ST53). If the biometric authentication for the recipient D is successful, the processor 31 generates a first key D of the recipient D who has succeeded in the biometric authentication (ST54). When the processor 31 generates the first key D, it generates a second key D paired with the first key D (ST55). The first key D and second key D generated by the receiver 12D may be generated by the same procedure as that described with respect to the first operation example.

When the processor 31 of the receiver 12D generates the second key D, it encrypts (locks) the generated second key D with the public key O (ST56). When the processor 31 encrypts the second key D with the public key O, it transmits data of the second key D encrypted with the public key O to the transmitter 11 of the sender O through the communication unit 35 (ST57).

The transmitter 11 of the sender O receives data of the second key D encrypted with the public key O from the receiver 12D of the recipient D through the communication unit 35. Upon receiving the second key D encrypted with the public key O, the processor 21 of the transmitter 11 decrypts (unlocks) the data of the second key D encrypted (locked) with the public key O by the private key O corresponding to the public key O (ST58). Thus, the processor 21 acquires the second key D as data decrypted (unlocked) with the private key O (ST59).

When the processor 21 of the transmitter 11 acquires the second key D from the receiver 12D of the recipient D that is an additional recipient, it encrypts (locks) the files with the second keys A, B, C and D of the recipients A, B, C and D that are all transmission destinations of the files (electronic data to be protected) including the recipient D that is an additional recipient (ST60). The processor 21 locks (encrypts) the files with the second keys A, B, C and D such that it can lock the files with the first key D corresponding to the second key D.

When the processor 21 encrypts (locks) the files with the second keys A, B, C and D, it creates an email to which the files locked with the second keys A, B, C and D are attached. The processor 21 may create the text of the email to which the files locked with the second keys A, B, C and D are attached by the sender O. The processor 21 may also add unlocking conditions as described with respect to the first operation example to the files locked with the second keys A, B, C and D attached to the email. When the processor 21 creates the email to which the files locked with the second keys A, B, C and D are attached, it transmits the created email to the recipient D (ST61).

The receiver 12D of the recipient D that is an additional recipient receives an email to which the files locked with the second keys A, B, C and D are attached, through the communication unit 35. The processor 31 of the receiver 12D stores the files, which are attached to the received email and locked with the second keys A, B, C and D, in the storage unit 34 (ST62).

After the files locked with the second keys A, B, C and D are stored, the processor 31 of the receiver 12D receives an unlocking request for the files locked with the second keys A, B, C and D. If unlocking conditions are set for the files locked with the second keys A, B, C and D, the processor 31 determines whether to accept the unlocking of the files according to whether the unlocking conditions are satisfied upon receipt of the unlocking request.

When the processor 31 of the receiver 12D unlocks the files in response to the unlocking request (YES in ST63), it causes the biometric authentication device 40 connected to the interface 36 to perform biometric authentication for the receiver D (ST64). If the biometric authentication for the recipient D is successful, the processor 31 acquires the first key D of the recipient D who has succeeded in the biometric authentication (ST65). The processor 31 uses the first key D to unlock the files locked with the second keys A, B, C and D (ST66) and opens the unlocked files so that they can be viewed (ST67).

The processor 21 of the transmitter 11 may also transmit to the recipients A, B, and C an email to which the files locked with the second keys A, B, C and D are attached. In this case, the receivers 12A, 12B and 12C of the recipients A, B and C each receive the email to which the files locked with the second keys A, B, C and D are attached, through the communication unit 35.

The processor 31 of each of the receivers 12A, 12B and 12C may update the files locked with the second keys A, B and C to the files locked with the second keys A, B, C and D attached to the newly received email. When the files locked with the second keys A, B, C and D are stored, the processor 31 of each of the receivers 12A, 12B and 12C has only to unlock the files locked with the second keys A, B, C and D using the first keys A, B and C acquired by biometric authentication for the recipients A, B and C.

According to the third operation example described above, even after a file has already been transmitted from a sender to a recipient, a new recipient capable of viewing the file can be added to one other than the existing recipients. The transmitter can securely transmit files locked with a plurality of keys, which include a key to be acquired by biometric authentication for the additional recipient and a key of the transmitted receiver, to a plurality of receivers, and each of the receivers can store the files protected by the key.

As a result, the recipients including the additional recipient can open the file protected at any time using a key that can be obtained by their own biometric authentication. Furthermore, a plurality of recipients who can be added can be prevented from being unable to view the file due to the loss of a password or the like, an authorized person (a person who can succeed in biometric authentication) can view a file with reliability at any time.

Next is a description of a fourth operation example of a file transmission/reception process to be performed by the information transmitter/receiver system 1 according to the present embodiment.

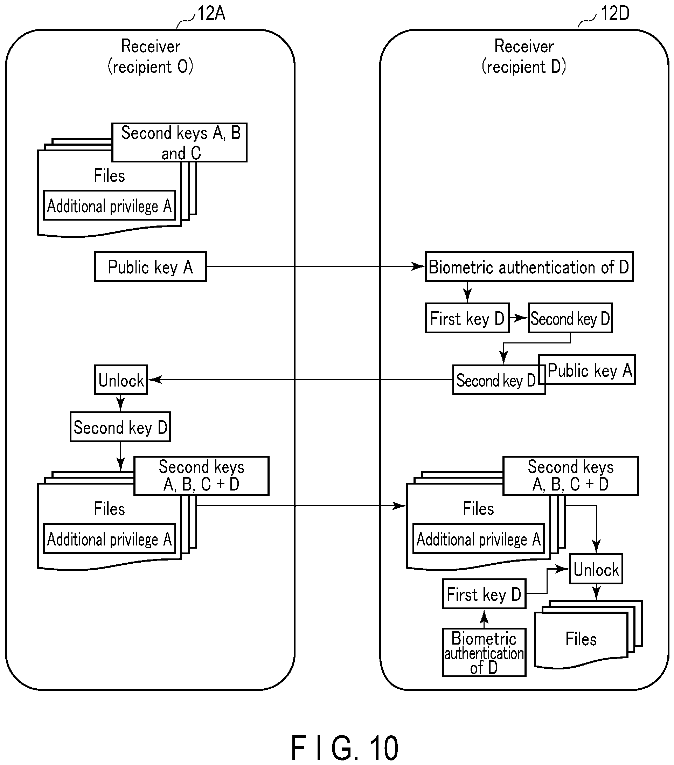

FIG. 10 is a schematic diagram illustrating a fourth operation example of the file transmission/reception process to be performed by the information transmitter/receiver system 1 according to the embodiment.

The fourth operation example will be described on the assumption that the sender O transmits the files locked with the second keys A, B and C to a plurality of recipients A, B and C according to the second operation example described above, and then the recipient A who has already received the files adds another recipient D to the recipients of the files, as shown in FIG. 10. Assume here that the receiver 12 (12D) of the recipient D can register the biometric information of the recipient D and perform biometric authentication for the recipient D under the same preconditions as described with respect to the third operation example.

Assume as a description of the fourth operation example that the transmitter 11 adds additional privilege information indicating that the recipient A is privileged to add a file recipient (additional privilege) to the files locked with the second keys A, B and C and transmits the files with the additional privilege information to the recipient A, as shown in FIG. 10. Assume that the receiver 12A of the recipient A stores the files to which the additional privilege information received from the transmitter 11 is given.

Assume that in this state a recipient D is added as an additional recipient to view the files. The receiver 12A of the recipient A who is privileged to add a recipient by the additional privilege information supplies the public key A of the recipient A (additional authorized person A) to the receiver 12D of the recipient D. When the receiver 12D of the recipient D acquires the public key A of the recipient (additional authorized person) A, it performs biometric authentication to authenticate the recipient D. The receiver 12D which has succeeded in the biometric identification for the recipient D generates a first key D of the recipient D and a second key D paired with the first key D. The receiver 12D transmits data obtained by encrypting (locking) the generated second key D with the public key A to the receiver 12A.

The receiver 12A acquires the second key D encrypted with the public key A from the receiver 12D, and decrypts (unlocks) the encrypted second key D using the private key A corresponding to the public key A to acquire the second key D. When the receiver 12A acquires the second key D of the recipient D, it locks (encrypts) the files with four second keys A, B, C and D to which the newly acquired second key D of the recipient D. Assume here that the files locked (encrypted) with the second keys A, B, C and D by the receiver 12A can be unlocked with the first key D.

The receiver 12A transmits the files locked with the second keys A, B, C and D to the receiver 12D of the recipient D. The receiver 12D of the recipient D stores the files locked with the second keys A, B, C and D received from the sender O. The receiver 12D stores the files locked with the second keys A, B, C and D received from the sender O and then unlocks the files locked with the second keys A, B, C and D using the first key D of the receiver D when the biometric authentication for the recipient D is successful, so that the files can be viewed.

The receiver 12A may store the files locked with the second keys A, B, C and D and transmit the files locked with the second keys A, B, C and D to the receivers 12B and 12C of the recipients B and C. In this case, the receivers 12B and 12 C store the files locked with the second keys A, B, C and D received from the recipient A. Thus, the receivers 12A, 12B and 12C that stores the files locked with the second keys A, B, C and D can unlock the files locked with the second keys A, B, C and D using the first keys A, B and C when the biometric authentication for each of the recipients A, B and C is successful.

Next is a description of the operation of each of the transmitter 11 and receiver 12 in the fourth operation example of the file transmission/reception process to be performed by the information transmitter/receiver system 1 according to the embodiment.

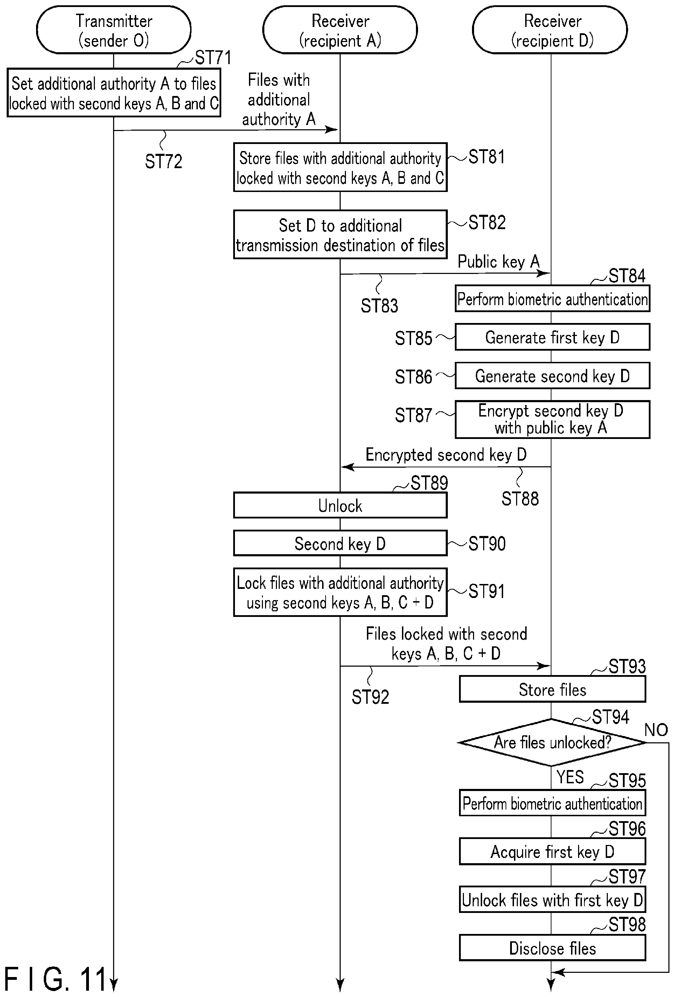

FIG. 11 is a sequence illustrating an operation example of each of the transmitter 11 and receiver 12 (12A, 12D) in the fourth operation example of the file transmission/reception process to be performed by the information transmitter/receiver system 1 according to the embodiment.

First, the processor 21 of the transmitter 11 sets additional privilege information indicating that the recipient A is privileged to add a file recipient (hereinafter referred to as additional privilege A) to the files locked with the second keys A, B and C (ST71). For example, the processor 21 may add the additional privilege A as attribute information for the file locked with the second keys A, B and C.

The processor 21 of the transmitter 11 transmits to the recipient A the files locked with the second keys A, B and C to which the additional privilege A is added (ST72). For example, the processor 21 adds the additional privilege A to the files locked with the second keys A, B and C before transmitting email with the files locked with the second keys A, B and C to their respective recipients A, B and C as the process of ST42 in FIG. 7. In addition, the processor 21 of the transmitter 11 may transmit the files locked with the second keys A, B and C with the additional privilege A to the recipient A as a process other than that shown in FIG. 7.

The receiver 12A of the recipient A receives from the transmitter 11 the files locked with the second keys A, B and C with the additional privilege A. The processor 31 of the receiver 12A stores the files received from the transmitter 11 and locked with the second keys A, B and C with the additional privilege A in the storage unit 34 or the like (ST81).

Assume that in this state, the recipient A who is authorized to add a file recipient (a person who is allowed to view the file) adds the recipient D as an additional recipient. For example, the recipient A instructs the operation unit 37 of the receiver 12A to add the recipient D to the transmission destination (recipient) of the file (electronic data to be protected). The processor 31 of the receiver 12A sets the recipient D as an additional transmission destination of the file in response to the operation instruction from the recipient A (ST82).

If the processor 31 sets the recipient D as a file additional recipient, it causes the communication unit 35 to transmit (disclose) the public key A of the recipient A to the recipient D, and the receiver 12D requests the receiver 12D to generate the second key D in connection with the biometric identification for the recipient D (ST83). For example, the processor 31 of the receiver 12A may transmit the request for the second key D and the public key A to the recipient D by email.

Upon receiving the request for the second key D from the recipient (additional authorized person) A, the processor 31 of the receiver 12D of the recipient D causes the biometric authentication device 40 connected to the interface 36 to perform biometric authentication for the recipient D (ST84). If the biometric authentication for the recipient D is successful, the processor 31 of the receiver 12D generates a first key D of the recipient D who has succeeded in the biometric authentication (ST85). When the processor 31 of the receiver 12D generates the first key D, it generates a second key D paired with the first key D (ST86). The first key D and the second key D generated by the receiver 12D may be the same as those described with respect to the first operation example.

When the processor 31 of the receiver 12D generates the second key D, it encrypts (locks) the generated second key D with the public key A (ST87). When the processor 31 of the receiver 12D encrypts the second key D with the public key A, it transmits the data of the second key D encrypted with the public key A to the receiver 12A of the recipient A through the communication unit 35 (ST88).

The receiver 12A of the recipient A receives data of the second key D encrypted with the public key A from the receiver 12D of the recipient D through the communication unit 35. Upon receiving the second key D encrypted with the public key A, the processor 31 of the receiver 12A decrypts (unlocks) the data of the second key D encrypted (locked) with the public key A by the private key A corresponding to the public key A (ST89). Thus, the processor 31 of the receiver 12A acquires the second key D as data decoded (unlocked) with the private key A (ST90).

When the processor 31 of the receiver 12A acquires the second key D from the receiver 12D of the recipient D that is an additional recipient, it adds the second key D of the recipient D to the files locked with the second keys A, B and C (ST91). The processor 31 of the receiver 12A locks (encrypts) the files using the second key D so that the files can be unlocked with the first key D corresponding to the second key D.

When the processor 31 of the receiver 12A encrypts (locks) the files with the second keys A, B, C and D, it creates an email to which the files locked with the second keys A, B, C and D are attached. The processor 31 of the receiver 12A may create the text of the email to be addressed to the recipient D. The processor 31 of the receiver 12A transmits the email to which the files locked with the second keys A, B, C and D are attached, to the recipient D through the communication unit 35 (ST92).

The receiver 12D of the recipient D that is an additional recipient receives an email to which the files locked with the second keys A, B, C and D are attached, through the communication unit 35. The processor 31 of the receiver 12D stores in the storage unit 34 the files attached to the received email and locked with the second keys A, B, C and D (ST93).

The processor 31 of the receiver 12D stores the files locked with the second keys A, B, C and D and then receives an unlocking request for the files locked with the second keys A, B, C and D. If an unlocking condition is set for the files locked with the second keys A, B, C and D, the processor 31 of the receiver 12D determines whether to accept the unlocking of the files according to whether the unlocking condition is satisfied when the unlocking request is received.

If the processor 31 of the receiver 12D unlocks the files in response to the unlocking request (YES in ST94), it causes the biometric authentication device 40 connected to the interface 36 to perform biometric authentication for the recipient D (ST95). When the biometric authentication for the recipient D is successful, the processor 31 acquires the first key D of the recipient D who has succeeded in the biometric authentication (ST96). The processor 31 uses the first key D to unlock the files locked with the second keys A, B, C and D (ST97) and opens the unlocked files so that they can be viewed (ST98).

The processor 31 of the receiver 12A may also transmit to the recipients B and C the email to which the files locked with the second keys A, B, C and D are attached. In this case, the receivers 12B and 12 C of the recipients B and C each receive the email to which the files locked with the second keys A, B, C and D are attached, and store the files locked with the second keys A, B, C and D.

The processor 31 of each of the receivers 12B and 12C may update the files locked with the second keys A, B and C to the files locked with the second keys A, B, C and D attached to the newly received email. When the processor 31 of each of the receivers 12B and 12C store the files locked with the second keys A, B, C and D, it has only to unlock the files locked with the second keys A, B, C and D using the first keys B an C obtained by biometric authentication for the recipients B and C.

According to the fourth operation example described above, even after a file has already been transmitted from a sender to a recipient, an additional authorized person who is authorized to add a recipient can add a new recipient who can view the file to one other than the existing recipients. The transmitter of the additional authorized person can securely transmit files locked with a plurality of keys, which include a key to be acquired by biometric authentication for the additional recipient and a key of the transmitted recipient, to the receiver of the additional recipient, and the receiver can store the file protected by the key of each recipient.

As a result, each recipient including the additional recipient can open the file protected at any time using a key that can be obtained by its own biometric authentication. Furthermore, a plurality of recipients who can be added can be prevented from being unable to view the file due to the loss of a password or the like, an authorized person (a person who can succeed in biometric authentication) can view a file with reliability at any time.

Next is a description of a fifth operation example of the file transmission/reception process to be performed by the information transmitter/receiver system 1 according to the present embodiment.

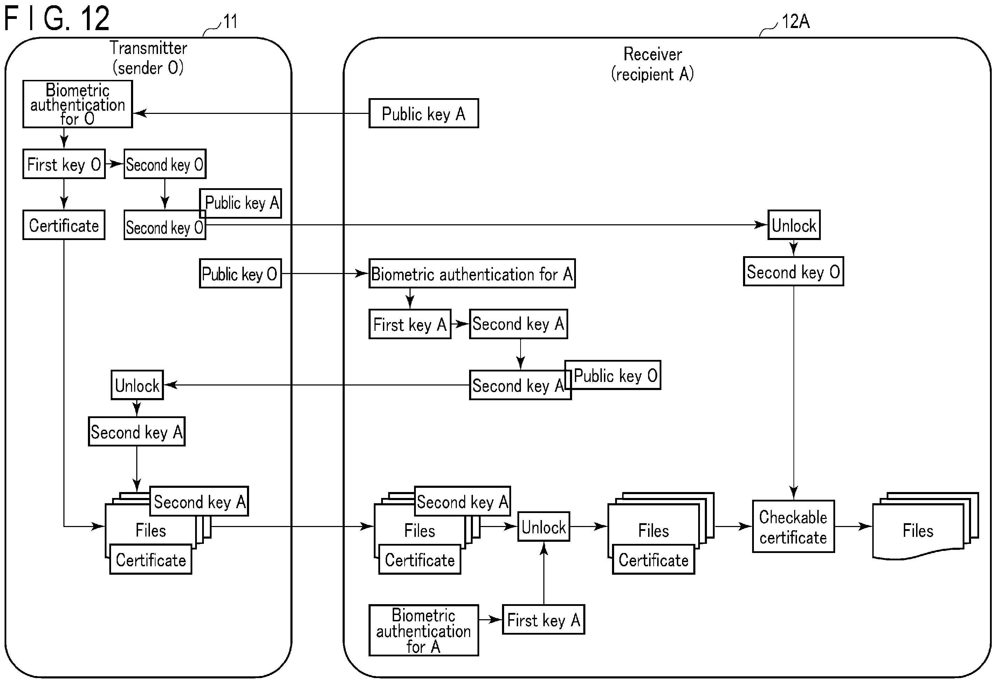

FIG. 12 is a schematic diagram illustrating the fifth operation example of the file transmission/reception process to be performed by the information transmitter/receiver system 1 according to the embodiment.

In the fifth operation example, a file is prevented from being tampered with. The file tampering prevention to be described in the fifth operation example is applicable to the foregoing first, second, third and fourth operation examples. As the fifth operation example, an example of operation to be performed when the tampering prevention is applied to the first operation example described above. In the fifth operation example, a file transmitted to a recipient is validated by an electronic certificate (hereinafter also referred to as a certificate) created by a sender of the file.

Assume that the information transmitter/receiver system 1 according to the fifth operation example has a function of performing biometric authentication for verifying that the transmitter 11 is the sender O. For example, the transmitter 11 may include a biometric identification unit or an interface for connecting a biometric identification device that performs biometric identification. It is assumed here that the transmitter 11 includes a biometric identification unit.

As shown in FIG. 12, in the fifth operation example, in addition to the first operation example shown in FIG. 4, the transmitter 11 of the sender creates a certificate with biometric authentication, and the receiver 12 of the recipient verifies the certificate attached to the received file. In the example shown in FIG. 12, it is also assumed that the transmitter 11 can register the biometric information of the sender O to perform biometric authentication for the sender O. It is assumed that the receiver 12A holds the public key (public key A) and the private key of the recipient A.

The transmitter 11 acquires the public key A of the recipient A from the receiver 12A of the recipient A in creating a certificate that can be verified by the recipient A. When the transmitter 11 acquires the public key A of the recipient A, it performs biometric authentication for verifying that the operator is the sender O. If the biometric authentication is successful (if it is verified that the operator is the sender O), the transmitter 11 generates a first key O of the sender O and a second key O corresponding to the first key O. When the transmitter 11 generates the second key O corresponding to the first key O, it transmits to the receiver 12A data obtained by encrypting the second key O with the public key A.

The receiver 12 A receives from the transmitter 11 the second key O encrypted (locked) with the public key A. The receiver 12A decrypts (unlocks) the encrypted second key A received from the transmitter 11 using the private key corresponding to the public key A to acquire the second key O and hold the acquired second key.

In addition, when the transmitter 11 generates the first key O in accordance with the biometric authentication for the sender O, it creates a certificate using the first key O. For example, the transmitter 11 calculates a hash value of a file to be transmitted to the recipient A and encrypts the calculated hash value with the first key O. The certificate for encrypting the hash value of the file with the first key O serves as data that can be verified by the second key O paired with the first key of the sender O. When the transmitter 11 creates a certificate that is checkable by the second key O, it creates a file with the certificate to be transmitted to the recipient A.

In addition, the transmitter 11 acquires the second key A of the recipient A through a process similar to that of the first operation example described above. When the transmitter 11 acquires the second key A, it locks (encrypts) the file with the certificate using the second key A of the recipient A and transmits the locked file to the receiver 12A of the recipient A.

The receiver 12 receives the file with the certificate locked with the second key A from the sender O and stores it. When the recipient A views the file locked with the second key A, the receiver 12 performs biometric authentication. If the recipient A is authenticated by the biometric authentication, the receiver 12 unlocks the file locked with the second key A using the first key A of the recipient A.

When the receiver 12A unlocks the file with the second key A, it further checks the certificate attached to the file using the second key O acquired from the sender O. For example, the receiver 12A calculates a hash value of the file unlocked with the second key A and decrypts the certificate with the first key O of the sender O which is acquired from the transmitter 11 through the procedure described above.

The receiver 12A determines whether the hash value calculated from the file matches the data of the certificate decrypted with the first key. For example, if the hash value of the file and the data of the certificate coincide with each other, the receiver 12A determines that the file is valid without being tampered, and makes it possible to view the file. If they do not coincide with each other, the receiver 12A makes it impossible to view the file because the file is likely to be tampered with.

Next is a description of the operations of the transmitter 11 and receiver 12 in the fifth operation example of the file transmission/reception process to be performed by the information transmitter/receiver system 1 according to the embodiment.

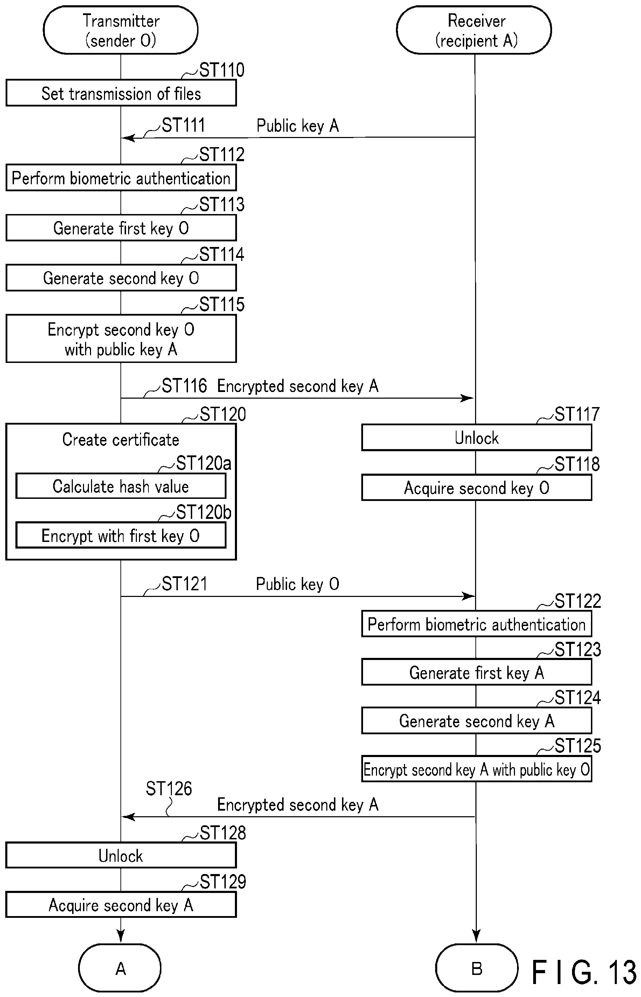

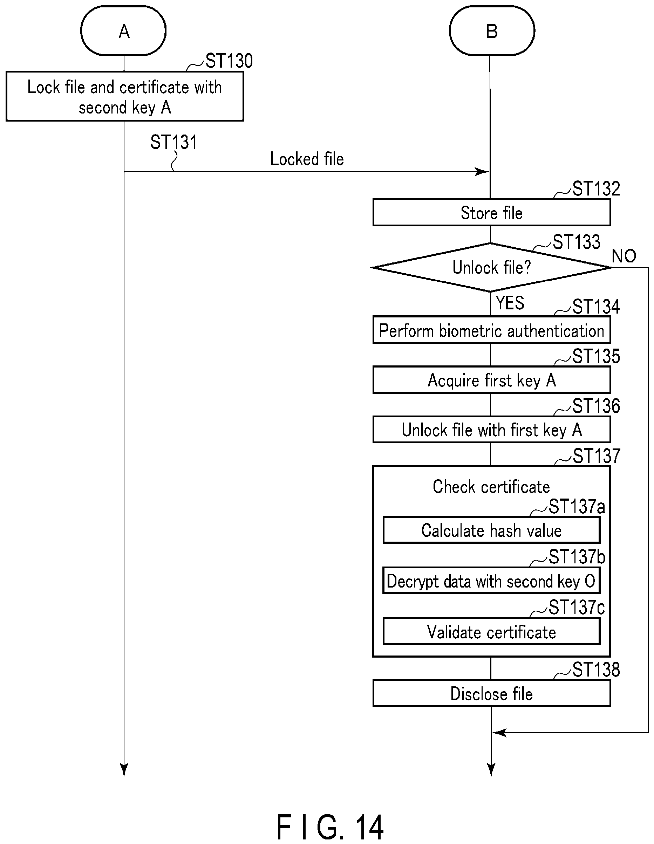

FIGS. 13 and 14 are sequences illustrating operation examples of the transmitter 11 and the receiver 12 in the fifth operation example of file transmission/reception process to be performed by the information transmitter/receiver system 1 according to the embodiment.

The sender O instructs the operation unit 27 of the transmitter 11 to transmit to the recipient A a file with a certificate (electronic data to be protected). The processor 21 of the transmitter 11 sets a transmission destination (recipient) and a file to be transmitted in response to an operation instruction from the sender O (ST110).

When the processor 21 of the transmitter 11 sets the recipient A as a transmission destination, it acquires the public key O of the recipient A (ST111). When the processor 21 of the transmitter 11 acquires the public key of the recipient A, it causes the biometric authentication unit to perform biometric authentication for the sender O (ST112). If the biometric authentication for the sender O is successful, the processor 21 generates the first key O of the sender O who has succeeded in the biometric authentication (ST113). When the processor 21 generates the first key O, it generates a second key O paired with the first key O (ST114). That is, the processor 21 generates a pair of keys for the sender O in accordance with the success of the biometric authentication for the sender O. The process of generating the first key O and second key O by the processor 21 of the transmitter 11 is similar to a process of generating the first key A and second key A by the receiver 12 described as the first operation example.

When the processor 21 of the transmitter 11 generates the second key O, it encrypts (locks) the generated second key O with the public key A (ST115). When the processor 21 encrypts the second key O with the public key A, it transmits data of the second key O encrypted with the public key A to the receiver 12A of the recipient A through the communication unit 35 (ST16).

The receiver 12A of the recipient A receives data of the second key O encrypted with the public key A from the transmitter 11 through the communication unit 35. Upon receiving the second key O encrypted with the public key A, the processor 21 of the receiver 12A decrypts (unlocks) the second key O, which is encrypted (locked) with the public key A, using the private key corresponding to the public key A (ST117). Thus, the processor 31 of the receiver 12A acquires the second key A (ST118) and holds the acquired second key A.

After generating the first key O, the processor 21 of the transmitter 11 creates a certificate for a file to be transmitted to the recipient A using the first key O (ST120). The processor 21 calculates a hash value of the file to be transmitted to the recipient A (ST120a) and encrypts the calculated hash value with the first key O (ST120b). The processor 21 uses the data obtained by encrypting the hash value of the file with the first key O as a certificate certifying that the sender (owner) of the file is the sender O.

Further, in order to lock the file to be transmitted to the recipient A, the processor 21 of the transmitter 11 performs a process of acquiring the second key of the recipient A in the same flow as that of the first operation example described above. That is, the processor 21 of the transmitter 11 transmits (discloses) the public key O of the sender O to the recipient A (ST121) and requests the second key from the recipient A.

Upon receiving the request for the second key A from the sender O, the processor 31 of the receiver 12A of the recipient A causes the biometric authentication device 40 connected to the interface 36 to perform biometric authentication for the recipient A (ST122). When the biometric authentication for the receiver A is successful, the processor 31 of the receiver 12A generates the first key A of the recipient A who has succeeded in the biometric authentication (ST123). When the processor 31 generates the first key A, it generates a second key A paired with the first key A (ST124). The processor 31 encrypts (locks) the generated second key A with the public key O (ST125) and transmits data of the second key A encrypted with the public key O to the transmitter 11 of the sender O (ST126).

Upon receiving the second key A encrypted with the public key O from the receiver 12A, the processor 21 of the transmitter 11 of the sender O decrypts (unlocks) the data of the second key A, which is encrypted (locked) with the public key O, using the private key corresponding to the public key O (ST128), and acquires the second key A as data decrypted (unlocked) with the private key (ST129).

Upon acquiring the second key A, the processor 21 of the transmitter 11 encrypts (locks) a file and a certificate to be transmitted to the recipient A using the second key A (ST130). The processor 21 of the transmitter 11 creates an email to which a file with a certificate locked with the second key A is attached. The processor 21 may add an unlocking condition to the file locked with the second key A attached to the email.

The processor 21 of the transmitter 11 transmits to the recipient A the email to which the file with a certificate locked with the second key A is attached. (ST131). Thus, the receiver 12A of the recipient A receives, through the communication unit 35, an email to which the file locked with the second key A is attached and which is to be addressed to the recipient A. The processor 31 of the receiver 12A stores the file with the certificate, which is locked with the second key A attached to the received email, in the storage unit 34 (ST132). The processor 31 may store the file locked with the second key A together with the attached email or may store the file locked with the second key A. The processor 31 may also store the file locked with the second key A in an external device such as a file server.

When the processor 31 of the transmitter 11 unlocks the file in response to the unlocking request from the recipient A (YES in ST133), it causes the biometric authentication device 40 connected to the interface 36 to perform biometric authentication for the recipient A (ST134). If the biometric authentication for the recipient A is successful, the processor 31 acquires the first key A of the recipient A who has succeeded in the biometric authentication (ST25). When the processor 31 acquires the first key A, it uses the acquired first key A to unlock the file with the certificate locked with the second key A (ST136).

When the processor 31 of the receiver 12A unlocks the file with the certificate locked with the second key A, it checks the certificate attached to the unlocked file (ST136). The processor 31 of the receiver 12A calculates a hash value of the file unlocked with the second key A as a check of the certificate (ST137a). When the processor 31 calculates the hash value of the file, it decrypts data as a certificate with the first key O of the sender O which is acquired in ST118 (ST137b). The processor 31 checks the hash value calculated from the file against the data of the certificate decrypted by the first key O to validate the certificate (ST137c). If the hash value of the file coincides with the certificate decrypted by the first key O, the processor 31 of the receiver 12A assumes that the file unlocked with the second key A is normal.

If the hash value of the file coincides with the certificate decrypted with the first key O, that is, if the file is validated by the certificate, the processor 31 of the receiver 12A makes it possible to view the unlocked file (ST138). If they do not coincide with each other, the processor 31 of the receiver 12A makes it impossible to view the file because the file is likely to be tampered with.

Note that the fifth operation example described above is not limited to the procedures shown in FIGS. 13 and 14. For example, the steps of ST111 to ST113 and ST120 may be executed by any procedure before ST130. In addition, the steps of ST115 to ST118 may be executed by any procedure before ST137.

In the foregoing operation example described with reference to FIGS. 13 and 14, the fifth operation example is combined with the first operation example. However, the fifth operation example may be combined with not only the first operation example but also the second, third or fourth operation example.

The foregoing fifth operation example of the information transmitter/receiver system according to the embodiment makes it possible to attach a certificate to a file (electronic data) locked with a key that can be obtained by biometric authentication for a recipient and then transmit/receive the file. Thus, the recipient can store a file that can be protected by a key and can be validated by the certificate. As a result, the recipient can acquire the file protected at any time by a key that can be obtained by biometric authentication and confirm that the acquired file is not tampered with.

That is, in the fifth operation example of the information transmitter/receiver system according to the embodiment, an authorized person (a person who can succeed in biometric authentication) can view a valid file at any time without making it impossible to view the file due to the loss of a password or the like.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the spirit of the inventions. The accompanying claims and their equivalents are intended to cover such forms or modifications as would fall within the scope and spirit of the inventions.

## Claims

1. An information transmitter/receiver system comprising a transmitter and a receiver, wherein:
the receiver includes:
a first communication unit which communicates with the transmitter;
an interface connected to a biometric authentication device which performs biometric authentication for a recipient;
a storage unit which stores a first key of a recipient who has succeeded in the biometric authentication performed by the biometric authentication device and a second key of the recipient corresponding to the first key; and
a first processor which causes the transmitter to store electronic data locked with the second key of the recipient and which unlocks the electronic data locked with the second key of the recipient using the first key of the recipient who has succeeded in the biometric authentication performed by the biometric authentication device, and
the transmitter includes:
a second communication unit which communicates with the receiver; and
a second processor which transmits to the receiver the electronic data locked with the second key of the recipient.

2. The information transmitter/receiver system according to claim 1, wherein:
in the receiver, the first processor transmits to the transmitter the second key of the recipient, which is locked with a public key of a sender who transmits the electronic data; and
in the transmitter, the second processor causes the receiver to unlock the second key of the recipient locked with the public key of the sender.

3. The information transmitter/receiver system according to claim 1, wherein:
the receiver includes a plurality of receivers;
in each of the receivers:
the interface is connected to a biometric authentication device which performs biometric authentication of a recipient;
the storage unit stores a first key of a recipient who has succeeded in the biometric authentication performed by the biometric authentication device connected to the interface, and a second key of the recipient corresponding to the first key; and
the second processor causes the transmitter to unlock the electronic data locked with a second key of a plurality of recipients who are permitted to unlock the electronic data, using the first key of the recipient who has succeeded in the biometric authentication performed by the biometric authentication device, and
in the transmitter:
the second communication unit communicates with the receivers; and
the second processor transmits to the recipients the electronic data locked with the second key of the recipients who are permitted to unlock the electronic data.

4. The information transmitter/receiver system according to claim 3, wherein:
in each of the receivers, the first processor transmits to the transmitter the second key of the recipient locked with the public key of the sender who transmits the electronic data; and
in the transmitter, the second processor causes a receiver of each of the recipients, which is a transmission destination of the electronic data, to unlock the second key of each of the recipients locked by the public key of the sender.

5. The information transmitter/receiver system according to claim 3, wherein in the transmitter, the second processor transmits electronic data locked with a second key of a recipient who is permitted to unlock the electronic data and then, if a recipient who is permitted to unlock the electronic data is added, the second processor transmits electronic data locked with a second key of the added recipient to the added recipient.

6. The information transmitter/receiver system according to claim 3, wherein in a receiver of an additional authorized person who is authorized to add a recipient who is permitted to unlock the electronic data, the first processor further causes the additional authorized person to transmit to the added recipient electronic data locked with a second key of the added recipient who is permitted to unlock the electronic data.

7. The information transmitter/receiver system according to claim 3, wherein:
the first processor in a receiver of the added recipient transmits the second key of the added recipient locked with a public key of the additional authorized person to the receiver of the additional authorized person; and
the first processor in a receiver of the additional authorized person causes the receiver of the added recipient to unlock the second key of the added recipient locked with the public key of the additional authorized person.

8. The information transmitter/receiver system according to any one of claims 1 to 7, wherein:
in the transmitter, the second processor sets an unlocking condition that allows the electronic data to be viewed, and transmits to the receiver electronic data with the unlocking condition locked with the second key of the recipients; and
in the receiver, the first processor causes the transmitter to store the electronic data with the unlocking condition locked with the second key of the recipients, and causes the transmitter to unlock the electronic data locked with the second key using the first key of the recipient if the unlocking condition is satisfied when the biometric authentication performed by the biometric authentication device is successful.

9. The information transmitter/receiver system according to any one of claims 1 to 8, wherein:
in the transmitter, the second processor causes the receiver to create an electronic certificate validating the electronic data and transmit to the receiver the electronic data which is locked with the second key of the recipient and to which the electronic certificate is attached; and
in the receiver, the first processor allows the electronic data to be viewed if the electronic data is validated using the electronic certificate attached to the electronic mail locked with the first key of the recipient who has succeeded in biometric authentication performed by the biometric authentication device.

10. The information transmitter/receiver system according to claim 9, wherein:
the transmitter further includes a second interface connected to a biometric authentication device which performs biometric identification for a sender; and
in the transmitter, the second processor creates an electronic certificate validating the electronic data if the biometric authentication performed by the biometric authentication device connected to the second interface is successful.

11. The information transmitter/receiver system according to claim 10, wherein:
in the transmitter, the second processor generates a first key of a sender who has succeeded in biometric authentication performed by the biometric authentication device connected to the second interface and a second key of the sender corresponding to the first key, and creates an electronic certificate in which the hash value of the electronic data is encrypted with the first key of the sender; and
in the receiver, the first processor allows the electronic data to be viewed if the hash value of the electronic data unlocked with the second key of the recipient coincides with a result of decoding the electronic certificate by the second key of the sender.

12. The information transmitter/receiver system according to claim 11, wherein:
in the transmitter, the second processor transmits the second key of the sender locked with the public key of the recipient to the recipient; and
in the receiver, the first processor causes the transmitter to unlock the second key of the sender locked with the public key of the recipient.
